# EUROPÄISCHE PATENTSCHRIFT

(11) **EP 0 371 964 B1**
(45) Veröffentlichungstag und Bekanntmachung des Hinweises auf die Patenterteilung: **04.08.1993**
(21) Anmeldenummer: 90102225.1
(22) Anmeldetag: 06.11.1986
(51) Int. Cl.: A01D 41/12

(54) **Mähdrescher**
Combine
Moissonneuse-batteuse

(30) Priorität: 02.12.1985 DE 3542577
(43) Veröffentlichungstag der Anmeldung: 06.06.1990
(62) Teilanmeldung aus: 86115414.4
(73) Patentinhaber: BISO GmbH Maschinenfabrik, D-32289 Rödinghausen (DE)
(72) Erfinder: Scharf, Alois, D-4520 Melle 8 St. Annen (DE)
(74) Vertreter: Zinnecker, Armin, Dipl.-Ing.

(56) Entgegenhaltungen:
- EP-A- 0 212 269
- DE-A- 2 805 208
- DE-B- 1 071 403
- FR-A- 2 411 550
- US-A- 2 826 204
- US-A- 4 137 923

## Beschreibung

Die Erfindung betrifft einen Mähdrescher mit einer Vorrichtung zum Verteilen der Spreu nach dem Oberbegriff des Anspruchs 1.

In Mähdreschern sind unter den Strohschüttlern Kurzstroh- und Körnersiebe angeordnet, auf denen Kurzstroh und die Spreu ausgesiebt wird, die durch vor den Siebkästen angeordnete Gebläse auf den Acker geblasen wird.

Wird das Stroh nicht lose auf den Acker geschüttet oder in Form von gepreßten Ballen gesammelt, kann unterhalb des hinteren Endes der Strohschüttler in dem Mähdrescher ein sogenannter Anbauhäcksler angeordnet sein, in den das Langstroh fällt und der dieses in gehäckselter Form möglichst gleichmäßig über die Schnittbreite des Mähdreschers hinter diesem ausstreut. Nährend üblicherweise eine möglichst gleichmäßige Verteilung des gehäckselten Strohs durch im Auslaufbereich des Anbauhäckslers angeordnete Strohverteilungsbleche angestrebt wird, fällt die von den Siebkästen ausgeblasene Spreu ohne besondere Verteilereinrichtungen auf den Acker, so daß sich nur eine sehr ungleichmäßige Verteilung über die Schnittbreite des Mähdreschers ergibt und unerwünschte Anhäufungen auftreten können. Da der Spreuanteil etwa ein Viertel des Strohs beträgt, kann dieser eine gute Verteilung des von einem Anbauhäcksler ausgestoßenen Häcksels zunichtemachen, wenn sich dieser dem verteilten Häcksel in Form eines Schwad überlagert.

Eine Vorrichtung zum Verteilen der Spreu nach dem Oberbegriff des Anspruchs 1 ist aus der DE-AS 10 71 403 bekannt.

Aus der US-A-4 137 923 ist eine Vorrichtung für Mähdrescher zum Verteilen der Spreu bekannt, die zwei einander gegenüberliegende Windräder besitzt, die gleichsinnig rotieren.

Aufgabe der Erindung ist es, einen Mähdrescher mit einer Vorrichtung zum Verteilen der Spreu zu schaffen, die sich raumsparend hinter den Siebkästen anordnen läßt und eine möglichst gleichmäßige Verteilung der Spreu ermöglicht.

Erfindungsgemäß wird diese Aufgabe durch die im kennzeichnenden Teil des Anspruchs 1 angegebenen Merkmale gelöst. Eine weitere Lösung ddieser Aufgabe, für die selbständig Schutz beansprucht wird, ist Gegenstand des nebengeordneten Anspruchs 2. Eine vorteilhafte Weiterbildung der Erfindung ist im Unteranspruch 3 beschrieben.

Die erfindungsgemäße Vorrichtung läßt sich raumsparend hinter den Siebkästen unterhalb der Strohhäcksler anordnen. Ist der Mähdrescher mit einem Strohhäcksler versehen, befindet sich das Blasluftdüsen aufweisende Gehäuse in dem Raum zwischen den Siebkästen und dem Häcksler unterhalb der Strohschüttler.

Durch die Ausblasöffnungen und Leitbleche werden fächerartig in Richtung auf die Seitenwände bzw. nach außen gerichtete Blasluftströme geschaffen, die die zugeblasene bzw. angesaugte Spreu fächerartig über die Schnittbreite des Mähdreschers auf den Acker blasen und dadurch über die Schnittbreite gleichmäßig verteilen.

Nach der ersten Lösung weist das Gehäuse hinter den Siebkästen einen im querschnitt etwa rechteckigen Kanal mit sich trichterförmig erweiterndem Auflaufbereich auf, wobei der Einlaufbereich des Kanals doppelwandig ausgebildet ist und die dadurch gebildete ringförmige Blasluftkammer mit Blasluftanschlüssen versehen ist. Die innere Wandung der Blasluftkammer ist lamellenartig oder durch zungenartige Leitbleche mit in Richtung auf den Auslaufbereich gerichteten Blasluftschlitzen versehen. Die auf den Auslaufbereich gerichteten Düsenöfnungen erzeugen durch Injektorwirkung eine den Blasluftstrom beschleunigende Strömung, so daß die Spreu mit guter Verteilung fächerartig auf den Boden ausgestreut wird. Zur Verbesserung der Strömungsverhältnisse kann sich zusätzlich auch der Einlaufbereich keil- oder trichterförmig verengen. In dem Auslaufbereich können fächerartig Luftleitbleche angeordnet sein, die die fächerartige Verteilung der Spreu begünstigen.

Nach der zweiten Lösung ist vorgesehen, daß unterhalb des hinteren Endbereichs der Siebkästen ein flacher Blasluftkasten angeordnet ist, der in seiner oberen Wandung durch lamellenartig angeordnete Bleche oder durch herausgebogene Zungen mit düsenartigen Blasluftöffnungen versehen ist, die einen fächerartigen Blasluftstrom mit seitlichen Komponenten zu den Mähdrescherseitenwänden bilden.

Um einen besseren Zugang zu den Siebkästen zu ermöglichen und um die Einstellung der mit den schlitzförmigen Blasluftdüsen versehenen Gehäuse in zusätzlichen Richtungen zu ermöglichen, ist in weiterer Ausgestaltung der Erfindung vorgesehen, daß das Gehäuse bzw. das oder die Blasluftrohre in einem Schlitten längsverschieblich und schwenkbar gehaltert sind, der in seitlichen Führungen des Mähdreschers längsverschieblich geführt und feststellbar ist.

Die Drosselklappen und Leitbleche können von Hand einzeln einstellbar und arretierbar sein. Es können auch die Drosselklappen und Leitbleche einstellende Gestänge vorgesehen sein, die mit besonderen Einstellmotoren oder zur Einstellung mit Druckmittel-Kolben-Zylinder-Einheiten verbunden sind. Die Erfindung wird nachstehend anhand der beigefügten Zeichnung näher erläutert, wobei die Zeichnungsfiguren 1 bis 11 keine Ausführungsbeispiele der Erfindung darstellen. In der Zeichnung zeigt
- Fig. 1: eine Seitenansicht eines Mähdreschers in schematischer Darstellung mit einer aufgebrochenen Seitenwand, so daß die Strohschüttler, die Siebkästen und der die Spreu verteilende Blasluftdüsenkörper sichtbar ist.
- Fig. 2: eine Draufsicht auf den Mähdrescher nach Fig. 1, bei dem der Bereich des Blasluftdüsenkörpers zur Verteilung der Spreu aufgebrochen ist,
- Fig. 3: eine Draufsicht auf einen die Spreu verteilenden Blasluftdüsenkörper,
- Fig. 3a: einen Schnitt durch den Düsenkörper nach Fig. 3 längs der Linie A - A,
- Fig. 4: eine andere Ausgestaltung eines rohrartigen Blasluftdüsenkörpers in Draufsicht,
- Fig. 4a: einen Schnitt durch den Blasluftdüsenkörper längs der Linie A - A in Fig. 4,
- Fig. 5: eine dritte Ausführungsform eines rohrförmigen Blasluftdüsenkörpers in Draufsicht,
- Fig. 5a: einen Schitt längs der Linie A - A in Fig. 5,
- Fig. 6: eine Draufsicht auf eine Trägeranordnung mit in dieser schwenkbar gelagerten Blasluftkästen,
- Fig. 6a: einen Schnitt längs der Linie A - A durch die Anordnung nach Fig. 6,
- Fig. 7: eine Draufsicht auf einen weiteren rohrförmigen Düsenkörper,
- Fig. 7a: einen Schnitt durch den Düsenkörper nach Fig. 7 längs der Linie A - A,
- Fig. 8: eine Seitenansicht eines U-förmigen Düsenkörpers in schematischer Darstellung,
- Fig. 9: eine Ansicht des Düsenkörpers in Richtung des Pfeils Y in Fig. 8,
- Fig. 10: eine der Fig. 9 entsprechende Ansicht einer anderen Ausgestaltung des Düsenkörpers mit einem dachartigen Vorsprung,
- Fig. 11: eine der Fig. 8 entsprechende Seitenansicht eines muldenförmigen Düsenkörpers,
- Fig. 12: einen schematischen Längsschnitt durch einen ringförmigen Düsenkörper mit trichterförmig erweiterten Ein- und Auslaufbereichen,
- Fig. 13: einen Querschnitt durch den Düsenkörper nach Fig. 12 längs der Linie A - B,
- Fig. 14: eine Seitenansicht eines kastenförmigen, im hinteren Endbereich der Siebkästen unterhalb von diesen angeordneten Düsenkörpers.

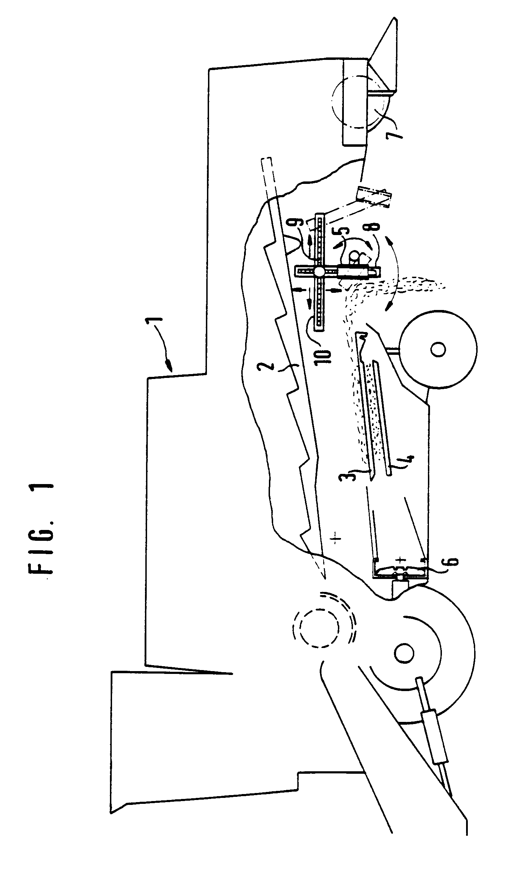

In Fig. 1 ist in Umrißlinien ein selbstfahrender Mähdrescher 1 angedeutet, dessen seitlich aufgebrochener Teil die Strohschüttler 2, das Kurzstrohsieb 3, das Körnersieb 4 und den die Spreu verteilenden Blasluftdüsenkörper 5 sichtbar macht. In Fahrtrichtung vor den Siebkästen 3, 4 ist ein Gebläse 6 angeordnet, das die Siebkästen 3, 4 anbläst und von diesen Kurzstroh und Spreu abbläst. Der Blasluftdüsenkörper 5 ist hinter den Siebkästen 3, 4 unterhalb des Strohschüttlers angeordnet. Der dargestellte Mähdrescher ist zusätzlich mit einem Anbauhäcksler 7 versehen. Der Blasluftdüsenkörper 5 befindet sich in dem Raum zwischen den Siebkästen 3, 4 und dem Anbauhäcksler 7 unterhalb der Strohschüttler 2.

Der aus einem langgestreckten rohrartigen Gehäuse bestehende Blasluftdüsenkörper ist längsverschieblich und schwenkbar in seitlichen Trägern 8 gehaltert, die schwenkbar in einem Schlitten 9 gelagert sind, der querverschieblich in Führungsschienen 10 geführt ist, die in horizontaler Richtung seitlich an den Wandungen des Mähdreschers 1 angeordnet sind. Die möglichen Verschiebe- und Schwenkrichtungen des Blasluftdüsenkörpers 5 sind in Fig. 1 durch Pfeile angedeutet. Weiterhin sind verschobene und verschwenkte Stellungen des Blasluftdüsenkörpers 5 in Fig. 1 strichpunktiert eingezeichnet.

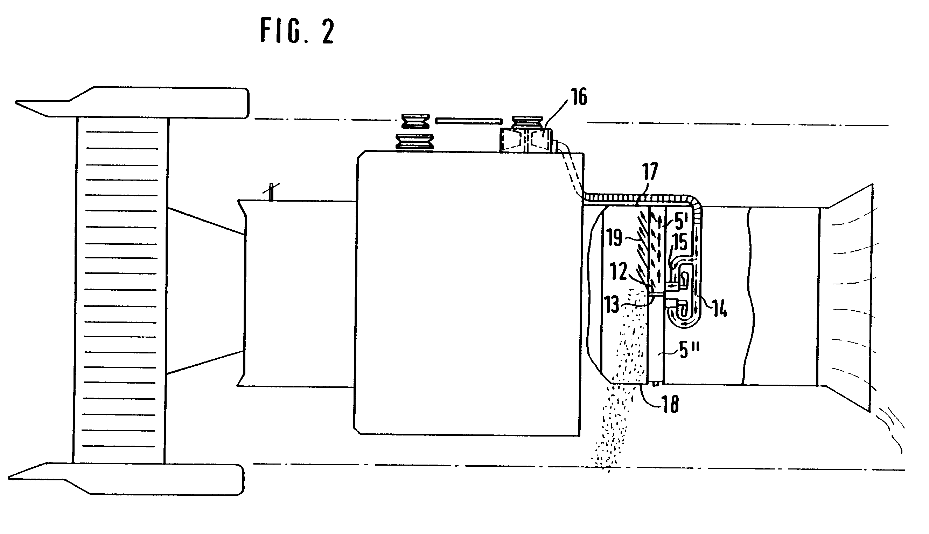

Wie aus Fig. 2 ersichtlich ist, besteht der Blasluftdüsenkörper 5 aus einem quer verlaufenden rohrartigen Körper, der in seinem mittleren Bereich durch Trennwände 12, 13 unterteilt ist. Die Blasluftdüsenkörperteile 5', 5'' sind jeder für sich um eine horizontale Querachse schwenkbar. Die Blasluftdüsenkörper 5', 5'' sind mit Anschlußstutzen versehen, an die Schläuche 14, 15 zur Zuführung von Blasluft angeschlossen sind. Die Blasluft wird von einem Gebläse 16 erzeugt, das über einen Keilriementrieb von dem Hauptantrieb des Mähdreschers angetrieben ist.

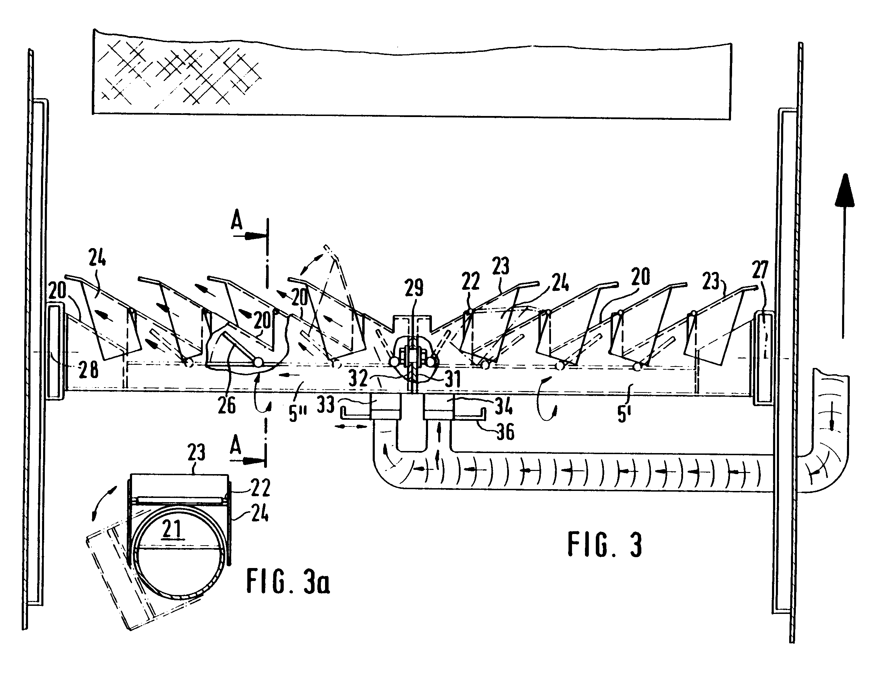

Die Blasluftdüsenkörperteile 5', 5'' sind mit jeweils zu den angrenzenden Seitenwandungen 17, 18 weisenden Klappen 19 versehen, die Blasluftdüsenöffnungen begrenzen und den Spreufluß fächerartig über die Schnittbreite des Mähdreschers auf den Boden umlenken. Bei dem Ausführungsbeispiel nach Fig. 3 bestehen die Blasluftdüsenkörper 5', 5'' jeweils aus rohrartigen Gehäusen, deren den Siebkästen zugewandte Seiten sägezahnförmig abgestuft sind. Die Abstufungen bestehen aus aufeinanderfolgenden abgeschrägten Wandungsteilen 20, die über Stufen 21 mit dem folgenden abgeschrägten Wandungsteil verbunden sind. Die Stufen 21 bilden etwa halbkreisförmige Austrittsöffnungen für die Blasluft. An den jeweils äußeren Kanten der sägezahnförmigen Stufen sind um etwa vertikale Achsen 22 Luftleitbleche 23 schwenkbar gelagert, die mit seitlich abgewinkelten Blechen 24 versehen sind, die die Blasluftdüsengehäuse 5', 5'' seitlich einfassen.

Im Innern der rohrförmigen Blasluftkörpergehäuse 5,', 5'' sind im Bereich der durch die Stufen gebildeten Austrittsöffnungen 21 Drosselklappen 26 angeordnet, durch die sich die jeweils ausströmenden Mengen von Blasluft steuern lassen.

Die Blasluftdüsenkörper 5', 5'', sind um Querachsen 27, 28 in den Seitenwänden der Haube des Mähdreschers schwenkbar gelagert. Sie sind darüberhinaus in ihrem mittleren Bereich um eine Querachse 29 schwenkbar miteinander verbunden. Die Querachse 29 ist in den die Düsenkörper 5', 5'' trennenden Seitenwandungen 31, 32 angeordnet.

Die die Düsenkörper 5', 5'' mit den Blasluftzuführungsschläuchen verbindenden Anschlußstutzen 33, 34 sind mit Schiebern 36 zur Steuerung der Blasluftmenge versehen.

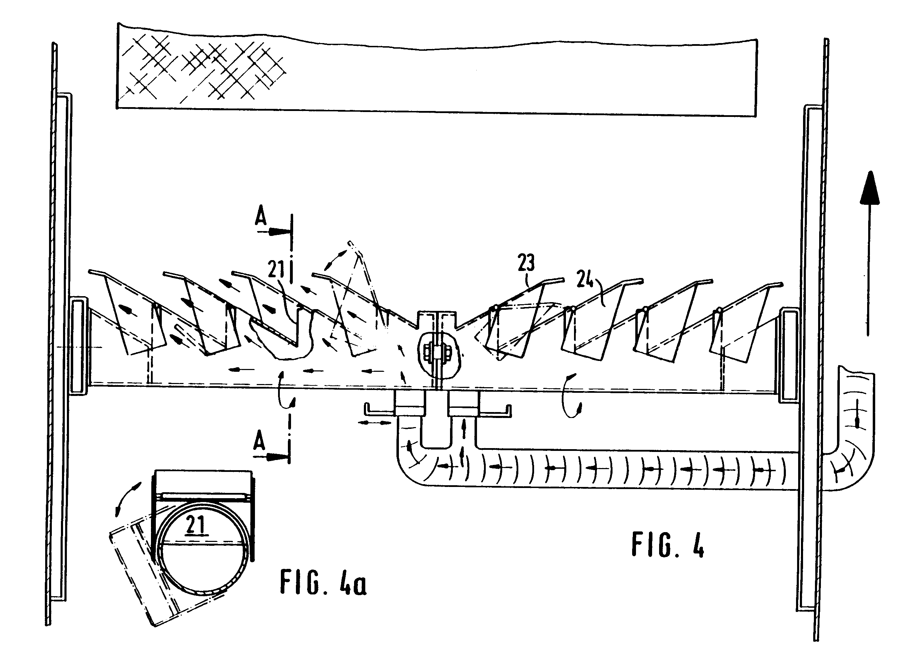

Das Ausführungsbeispiel nach den Fig. 4 und 4a unterscheidet sich von dem nach den Fig. 3 und 3a im wesentlichen nur dadurch, daß auf die die Blasluftmengen steuernden Drosselklappen 26 verzichtet worden ist.

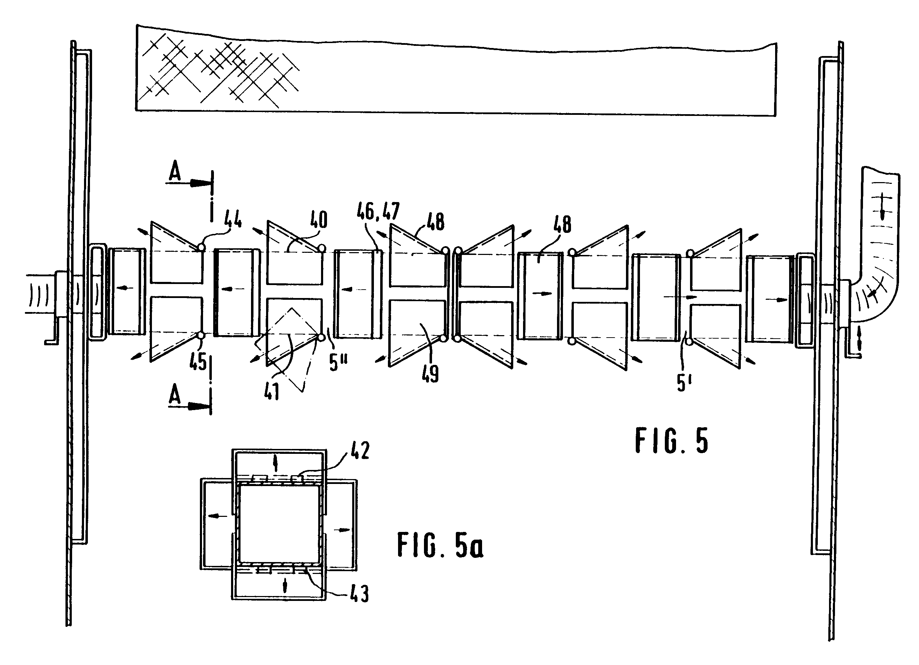

Bei dem Ausführungsbeispiel nach den Fig. 5, 5a bestehen die Teile 5' und 5'' der Blasluftdüsenkörper aus im Querschnitt viereckigen Rohren, die in aufeinanderfolgenden Abschnitten um jeweils 90° versetzt zueinander mit gegenüberliebenden Blasluftaustrittsöffnungen 40, 41 und 42, 43 versehen sind. An den inneren Kanten dieser Blasluftöffnungen sind um zur Längsachese der Blasluftdüsenkörper 5', 5'' rechtwinkelige Achsen 44, 45 und 46, 47 Luftleitklappen 48 schwenkbar gelagert, die mit seitlichen abgewinkelten Blechen 49 versehen sind, die seitlich das Vierkantrohr des Blasluftdüsenkörpers einfassen. Die in Draufsicht sichtbaren Luftleitbleche 48 verdecken jeweils die darunterliegenden Austrittsöffnungen 42. Bei dem Ausführungsbeispiel nach den Fig. 5 und 5a sind die Blasluftdüsenkörper 5', 5'' also rundum mit schräggerichteten Düsenöffnungen versehen, die Blasluft zur Verteilung des Spreuflusses ausblasen.

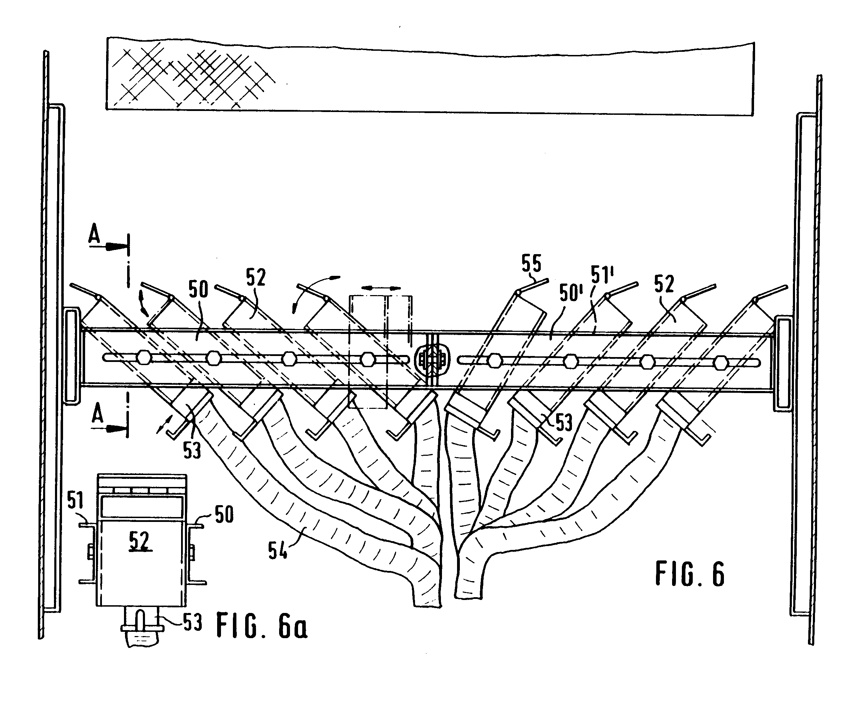

Bei dem Ausführungsbeispiel nach den Fig. 6 und 6a sind in den Haubenseitenwänden um eine horizontale Querachse schwenkbar paarweise angeordnete U-Träger 50,51 unr 50', 51'' schwenkbar gelagert, zwischen denen einzelne Blasluftkästen 52 schwenkbar gehaltert sind. Die Blasluftkästen 52 sind an ihren in Fahrtrichtung hinteren Enden mit Anschlußstutzen 53 für die Blasluftschläuche 54 versehen. An ihren in Fahrtrichtung vorderen Enden weisen die Kästen 52 schwenkbare Klappen 55 auf, mit denen der Blasluftstrom in der gewünschten Richtung umgelenkt werden kann.

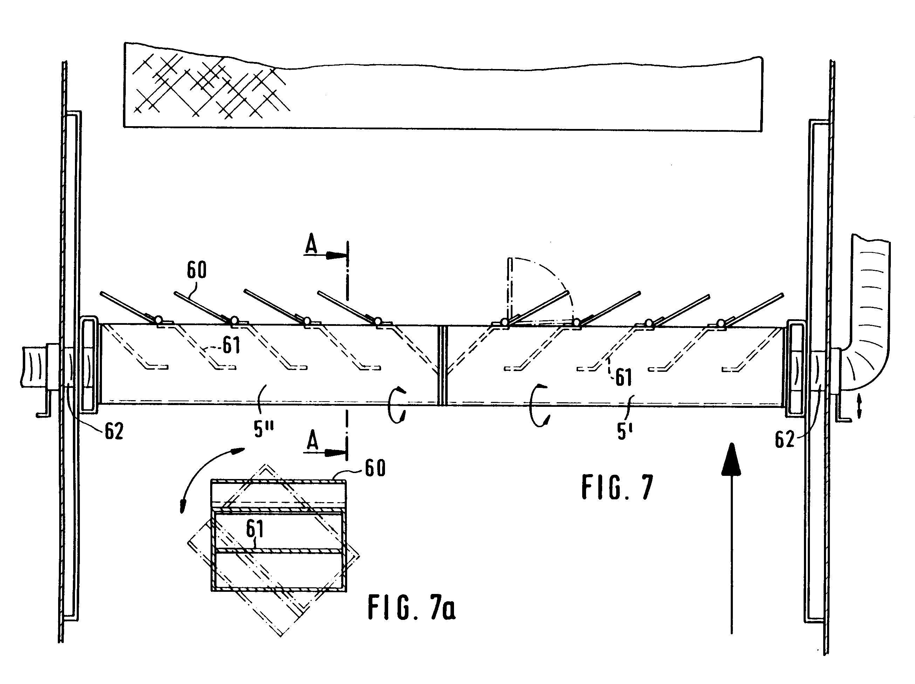

Bei dem Ausführungsbeispiel nach den Fig. 7 und 7a bestehen die Teile 5', 5'' des Blasluftdüsenkörpers wiederum aus um eine horizontale Querachse relativ zueinander schwenkbaren Rohren mit viereckigem Profil, die auf ihren den Siebkästen zugewandten Seiten mit Austrittsöffnungen versehen sind, die durch schwenkbare Luftleitbleche 60 verschließbar sind. Durch diese Luftleitbleche 60 läßt sich der Blasluftstrom in die gewünschte Richtung einstellen.

Im Innern der Teile 5', 5'' der Blasluftdüsenkörper sind Luftleitbleche 61 eingeschweißt, die die Blasluft verteilen und zu den Austrittsöffnungen leiten.

Die Blasluft wird den Teilen 5', 5'' des Blasluftdüsenkörpers über stirnseitig angeordnete sogenannte Drehdurchführungen 62 zugeführt.

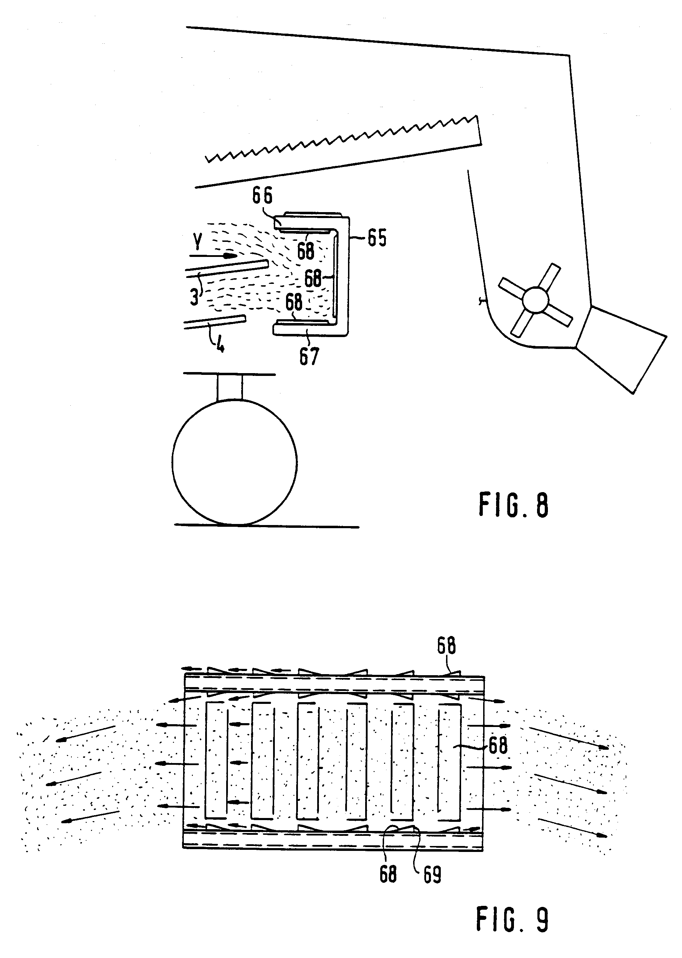

Bei dem Ausführungsbeispiel nach Fig. 8 besteht der Blasluftdüsenkörper aus einem Gehäuse 65, dessen Wandungen einen U-förmigen Kanal begrenzen, dessen Schenkel 66, 67 gegen die Siebkästen 3, 4 gerichtet sind. Die von den Schenkeln eingefaßten inneren Wandungen sind mit aus diesen herausgebogenen Zungen 68 versehen, die in der aus Fig. 9 ersichtlichen Weise schlitzförmige Düsenöffnungen begrenzen, die ausgehend von der Mitte jeweils nach außen gerichtet sind. Zum Abblasen von Staub und sich ablagernder Spreu ist auch die obere Wandung des oberen Schenkels mit zungenartig herausgebogenen Leitblechen 68 versehen.

Die Richtung des aus den spaltförmigen Düsenöffnungen 69 austretenden Blasluftstroms ist in Fig. 9 durch Pfeile angedeutet.

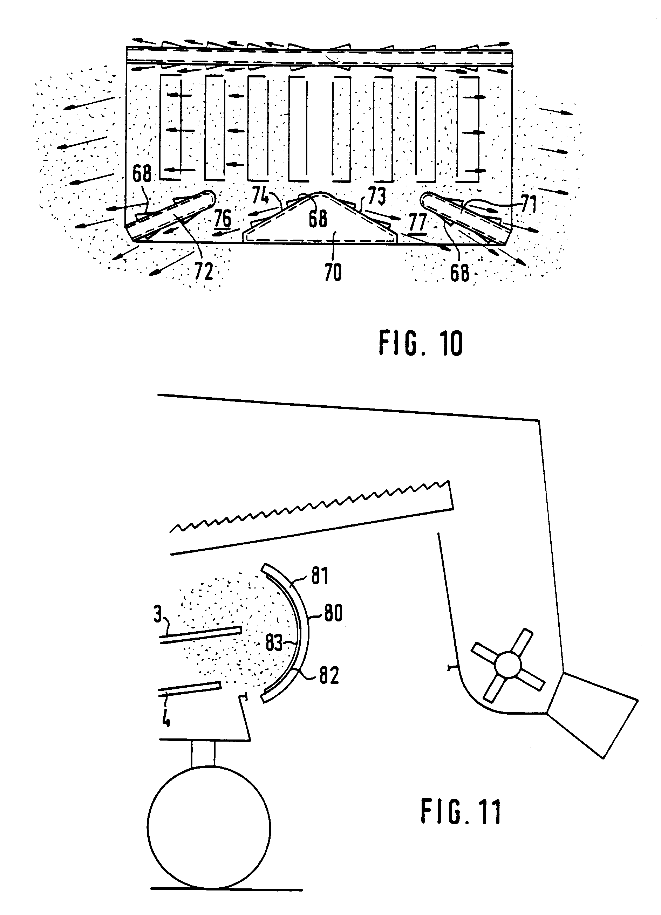

Statt des unteren Schenkels 67 in Fig. 8 und 9 kann, wie aus Fig. 10 ersichtlich, auch ein mittlerer dachförmig abgeschrägter Fortsatz 70 vorgesehen sein, zu dessen beiden Seiten stegartige Kammern 71, 72 vorgesehen sind, die etwa parallel zu den Schrägflächen 73, 74 des dachförmigen Körpers verlaufen. Die Schrägflächen 73, 74 sowie die oberen und unteren Seitenwandungen der stegartigen Körper 71, 72 sind ebenfalls mit herausgebogenen Zungen 68 versehen, so daß düsenartige Austrittsschlitze gebildet sind. Zwischen den Schrägflächen 73, 74 und den Körpern 71, 72 sind kanalartige Bereiche 76, 77 gebildet, die dem fächerartigen Ausblasen der Blasluft und damit der gewünschten Spreuverteilung dienen.

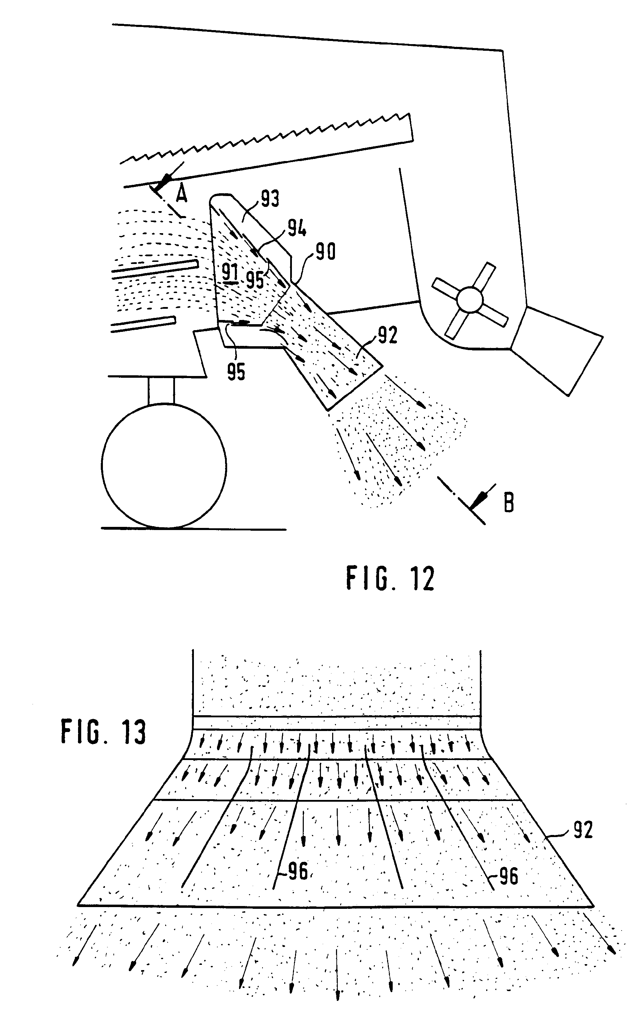

Bei dem Ausführungsbeispiel nach Fig. 11 besteht der Blasluftdüsenkörper aus einem schalenförmigen Gehäuse 80, das einen kreisbogenförmig gekrümmten Kanal 81 begrenzt. Die konkave Seite dieses schalenförmigen Blasluftdüsenkörpers ist den Sieben 3, 4 zugewandt. Die Innenwandung 82 des Blasluftdüsenkörpers 80 ist wiederum mit zungenartig herausgebogenen Luftleitblechen 83 versehen, die ausgehend von einer mittleren Vertikalebene jeweils auf die Seitenwände gerichtet sind.

Bei dem Ausführungsbeispiel nach den Fig. 12 und 13 ist ein Blasluftdüsenkörper in Form eines geschlossenen düsenartigen Rohres 90 mit trichter- oder keilförmig sich verengendem Einlaufbereich 91 und sich mit düsenartig erweiterndem Auslaufbereich 92 vorgesehen. Der Einlaufbereich weist eine umlaufende ringförmige Kammer 93 auf, die in nicht dargestellter Weise mit Blasluftanschlüssen versehen ist.

Die innere Wandung dieses Einlaufbereiches besteht aus lamellenartig angeordneten Blechen 94, die in Richtung der Pfeile weisende schlitzförmige Düsenöffnungen 95 bilden. Die aus diesen Düsenöffnungen 95 austretende Blasluft saugt den die Spreu tragenden Blasluftstrom injektorartig an und beschleunigt diesen. Im Auslaufbereich 42 wird der Blasluftstrom fächerartig aufgeweitet, so daß die Spreu gleichmäßig über die Schnittbreite verteilt wird.

Wie aus Fig. 13 ersichtlich ist, sind im Auslaufbereich 92 zusätzlich noch Leitbleche 96 angeordnet, die die fächerartige Aufteilung des Blasluftstromes begünstigen. Der aus dem Auslaufbereich 92 austretende Blasluftstrom ist schräg gegen den Acker nach hinten gerichtet, so daß eine gute Verteilung der Spreu und des Kurzstrohs erreicht wird.

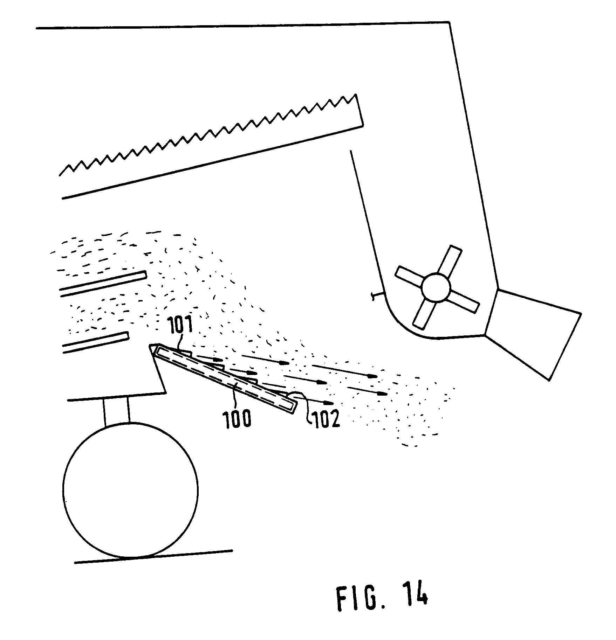

Bei dem Ausführungsbeispiel nach Fig. 14 besteht der Blasluftdüsenkörper aus einem flachen quaderförmigen Gehäuse 100, dessen obere Wandung mit zungenartig herausgebogenen Luftleitblechen 101 versehen ist, die in Richtung der Pfeile weisende Blasluftdüsenöffnungen 102 bilden. Die Blasluftdüsenöffnungen 102 sind fächerartig angeordnet, so daß der von den Siebkästen kommende angesaugte und die Spreu tragende Blasluftstrom in Richtung der Pfeile fächerartig aufgeweitet und die Spreu gleichmäßig verteilt wird.

## Patentansprüche

1. Mähdrescher mit einer Vorrichtung zum Verteilen der Spreu mit mindestens einem Gehäuse, das mindestens einen Anschluß zur Zuführung von Druckluft und mindestens eine mit mindestens einem Leitblech versehene Ausblasöffnung aufweist,
dadurch gekennzeichnet,
daß das Gehäuse unmittelbar oder über Trageinrichtungen an den Seitenwänden oder seitlichen Trägern des Mähdreschers (1) im Bereich der Höhe der Siebkästen (3, 4) hinter diesen und unterhalb der Strohschüttler (2) angeordnet ist
und daß das Gehäuse hinter den Siebkästen (3, 4) einen im Querschnitt etwa rechteckigen Kanal mit sich trichterförmig erweiterndem Auslaufbereich (92) aufweist, daß der Einlaufbereich (91) des Kanals doppelwandig ausgebildet und die dadurch gebildete ringförmige Blasluftkammer (93) mit Blasluftanschlüssen versehen ist und daß die innere Wandung der Blasluftkammer lamellenartig oder durch zungenartige Leitbleche (94) mit in Richtung auf den Auslaufbereich gerichteten Blasluftschlitzen versehen ist, wobei sich der Einlaufbereich vorzugsweise keil- oder trichterförmig verengt und wobei in dem Auslaufbereich vorzugsweise fächerartig Leitbleche angeordnet sind.

2. Mähdrescher mit einer Vorrichtung zum Verteilen der Spreu mit mindestens einem Gehäuse, das mindestens einen Anschluß zur Zuführung von Druckluft und mindestens eine mit mindestens einem Leitblech versehene Ausblasöffnung aufweist,
dadurch gekennzeichnet,
daß das Gehäuse unmittelbar oder über Trageinrichtungen an den Seitenwänden oder seitlichen Trägern des Mähdreschers (1) im Bereich der Höhe der Siebkästen (3, 4) hinter diesen und unterhalb der Strohschüttler (2) angeordnet ist
und daß unterhalb des hinteren Endbereichs der Siebkästen (3, 4) ein flacher Blasluftkasten angeordnet ist, der in seiner oberen Wandung durch lamellenartig angeordnete Bleche oder durch herausgehobene Zungen mit düsenartigen Blasluftöffenungen versehen ist, die einen fächerartigen Blasluftstrom mit seitlichen Komponenten zu den Mähdrescherseitenwänden bilden.

3. Mähdrescher nach Anspruch 1 oder 2, dadurch gekennzeichnet, daß das Gehäuse in einem Schlitten (9) längsverschieblich und schwenkbar gehaltert ist, der in seitlichen Führungen (10) des Mähdreschers (1) längsverschieblich geführt ist und feststellbar ist.

## Claims

1. Combine harvester, with a chaff-distributing device having at least one housing which possesses at least one connection for the supply of compressed air and at least one blow-out orifice provided with at least one guide plate, characterised in that the housing is arranged directly or via supporting devices on the side walls or lateral bearers of the combine harvester (1) in the region of the height of the screen boxes (3, 4) behind these and underneath the straw vibrators (2), and in that the housing has, behind the screen boxes (3, 4), a channel of approximately rectangular cross-section, with an exit region (92) widening in a funnel-shaped manner, in that the entry region (91) of the channel is made double-walled and the annular blowing-air chamber (93) formed thereby is provided with blowing-air connections, and in that the inner wall of the blowing-air chamber is provided in a slat-like manner or by means of tongue-like guide plates (94) with blowing-air slits directed towards the exit region, the entry region preferably being narrowed in a wedge-shaped or funnel-shaped manner, and guide plates being arranged in the exit region preferably in a fan-like manner.

2. Combine harvester, with a chaff-distributing device having at least one housing which possesses at least one connection for the supply of compressed air and at least one blow-out orifice provided with at least one guide plate, characterised in that the housing is arranged directly or via supporting devices on the side walls or lateral bearers of the combine harvester (1) in the region of the height of the screen boxes (3, 4) behind these and underneath the straw vibrators (2), and in that arranged underneath the rear end region of the screen boxes (3, 4) is a shallow blowing-air box which is provided in its upper wall, by means of plates arranged in a slat-like manner or by means of lifted-out tongues, with nozzle-like blowing-air orifices which form a fan-like blowing-air strew having lateral components relative to the side walls of the combine harvester.

3. Combine harvester according to Claim 1 or 2, characterised in that the housing is mounted so as to be longitudinally displaceable and pivotable in a slide (9) which is guided so as to be longitudinally displaceable in lateral guides (10) of the combine harvester (1) and which can be locked.

## Revendications

1. Moissonneuse-batteuse avec un dispositif pour répartir la balle, comprenant au moins un boîtier qui présente au moins un raccord pour l'amenée d'air comprimé et au moins une ouverture de soufflage pourvue d'au moins une tôle de guidage,
caractérisée
en ce que le boîtier est disposé directement ou par des dispositifs de support aux parois latérales ou à des supports latéraux de la moissonneuse-batteuse (1) au voisinage de la hauteur des caissons de crible (3, 4) derrière ceux-ci et en dessous des secoueurs de paille (2), et en ce que le boîtier présente derrière les caissons de crible (3, 4) un canal à peu près rectangulaire en section transversale avec une zone de sortie (92) s'élargissant en forme d'entonnoir, en ce que la zone d'entrée (91) du canal est réalisée avec une paroi double et que la chambre d'air de soufflage annulaire (93) ainsi formée est pourvue de raccords d'air de soufflage, et en ce que la paroi interne de la chambre d'air de soufflage est pourvue de fentes d'air de soufflage en forme de lamelles ou constituée par des tôles de guidage en forme de languettes (94) orientées dans la direction vers la zone de sortie, la zone d'entrée rétrécissant de préférence en forme de coin ou d'entonnoir, et dans la zone de sortie étant disposées de préférence des tôles de guidage en forme d'éventail.

2. Moissonneuse-batteuse avec un dispositif pour répartir la balle, comprenant au moins un boîtier qui présente au moins un raccord pour l'amenée d'air comprimé et au moins une ouverture de soufflage pourvue d'au moins une tôle de guidage, caractérisée en ce que le boîtier est disposé directement ou par des dispositifs de support aux parois latérales ou à des supports latéraux de la moissonneuse-batteuse (1) au voisinage de la hauteur des caissons de crible (3, 4) derrière ceux-ci et en dessous des secoueurs de paille (2), et en ce qu'un caisson d'air de soufflage plat est disposé en dessous de la zone extrême arrière des caissons de crible (3, 4) et qui est pourvu, dans sa paroi supérieure, de tôles disposées en lamelles ou de languettes sorties présentant des ouvertures d'air de soufflage en forme de buse qui constituent un courant d'air de soufflage en forme d'éventail avec des composantes latérales vers les parois latérales de la moissonneuse-batteuse

3. Moissonneuse-batteuse selon la revendication 1 ou 2, caractérisée en ce que le boîtier est monté de façon pivotante et déplaçable longitudinalement dans un chariot (9) qui est guidé de façon déplaçable longitudinalement dans des guidages latéraux (10) de la moissonneuse-batteuse (1) et qui peut y être fixé.
